# EUROPÄISCHE PATENTSCHRIFT

(11) **EP 2 689 319 B1**
(45) Veröffentlichungstag und Bekanntmachung des Hinweises auf die Patenterteilung: **13.05.2015**
(21) Anmeldenummer: 12709536.2
(22) Anmeldetag: 13.03.2012
(51) Int. Cl.: G06F 3/044, G06F 3/01, G06F 3/048

(54) **VERFAHREN ZUM ERKENNEN EINER BETÄTIGUNGSBEWEGUNG FÜR EINE BETÄTIGUNGSVORRICHTUNG EINES KRAFTFAHRZEUG-AUSSTATTUNGSELEMENTS UND BETÄTIGUNGSVORRICHTUNG EINES KRAFTFAHRZEUG-AUSSTATTUNGSELEMENTS**
METHOD AND DEVICE FOR VALIDATION OF INPUT GESTURE FOR CONTROLLING A VEHICLE FUNCTIONALITY
PROCÉDÉ DE RECONNAISSANCE D'UN MOUVEMENT D'ACTIONNEMENT POUR UN DISPOSITIF D'ACTIONNEMENT D'UN ÉLÉMENT D'ÉQUIPEMENT D'UN VÉHICULE AUTOMOBILE, AINSI QU'UN DISPOSITIF D'ACTIONNEMENT D'UN ÉLÉMENT D'ÉQUIPEMENT D'UN VÉHICULE AUTOMOBILE

(30) Priorität: 23.12.2011 DE 102011122180; 23.03.2011 DE 102011014814
(43) Veröffentlichungstag der Anmeldung: 29.01.2014
(73) Patentinhaber: Daimler AG, 70327 Stuttgart (DE)
(72) Erfinder: ENTENMANN, Volker, 71563 Affalterbach (DE); ZHANG-XU, Tingting, 71069 Sindelfingen (DE)
(74) Vertreter: JENSEN & SON
(86) Internationale Anmeldenummer: PCT/EP2012/001116
(87) Internationale Veröffentlichungsnummer: WO 2012/126586

(56) Entgegenhaltungen:
- GB-A- 2 423 808
- US-A1- 2008 192 024
- US-A1- 2010 328 253

## Beschreibung

Die Erfindung betrifft ein Verfahren zum Erkennen einer Betätigungsbewegung für eine Betätigungsvorrichtung eines Kraftfahrzeug-Ausstattungselements gemäß dem Oberbegriff des Anspruchs 1 und die Betätigungsvorrichtung des Kraftfahrzeug-Ausstattungselements.

Die Verwendung von gesten- oder bewegungsbasierten Bedienvorgängen in einem Kraftfahrzeug ist bekannt. Die US 2010/0185341 A1 beschreibt ein Verfahren und eine Vorrichtung zum Aktivieren eines Fahr-zeugbetriebsmodus. Sie bezieht sich dabei auf die räumliche und zeitbasierte oder nicht-zeitbasierte Gestenerkennung durch Erfassen von Bewegungen gekoppelt mit einem Abgleich mit einer vorbestimmten Geste. Das offenbarte Verfahren weist das visuelle Überwachen von vorbestimmten räumlichen Stellen im Inneren oder in der Nähe des Fahrzeugs, das Erfassen einer vorbestimmten Geste innerhalb einer der vorbestimmten räumlichen Stellen und das Aktivieren des vorbestimmten Fahrzeugbetriebsmodus als Reaktion auf die vorbestimmte Geste und einen gegenwärtigen Fahrzeugbetriebsmodus auf. Die entsprechende Vorrichtung weist daher einen oder mehrere Sensoren, um die verschiedenen räumlichen Stellen visuell zu überwachen, und ein damit gekoppeltes Steuergerät auf.

Neben derartigen visuell operierenden Sensoren sind auch kapazitive Sensoren zum Erfassen von Näherungs- oder Berührungsgesten bekannt. Dabei werden zum Beispiel zum Bedienen von Funktionseinheiten in einem Fahrzeug vier kapazitive Sensoren verwendet, die in Ecken oder Seitenmittelpunkten eines Quadrats angeordnet sind, um Bedienungsgesten zu erfassen. Die Verwendung von vier Sensoren, die als erforderlich gelten, um eine einzige Geste eindeutig als beabsichtigte Bedienungsgeste zu identifizieren, erfordert allerdings einen hohen Platzbedarf. Dieser ist in einem Kraftfahrzeug bei Bauraumenge je nach Art der Betätigungsvorrichtung nur schwer oder gar nicht realisierbar.

Aus jeder der GB 2 423 808 A und der US 2008/192024 A1 ist ein Verfahren gemäß dem Oberbegriff des Anspruchs 1 bekannt.

Aus der US 2010/328253 A1 ist es bekannt, eine Bewegungsdynamik einer Geste zu deren Identifizierung heranzuziehen.

Ausgehend von diesem Stand der Technik ist es Aufgabe der vorliegenden Erfindung, ein Verfahren und eine Betätigungsvorrichtung zum Erkennen einer Betätigungsbewegung zu schaffen, die ein zuverlässiges Erkennen einer Betätigungsbewegung mit einer verringerten Sensoranzahl zulassen.

Diese Aufgabe wird erfindungsgemäß durch ein Verfahren mit den Merkmalen des Anspruchs 1 sowie eine Betätigungsvorrichtung mit den Merkmalen des Anspruchs 5 gelöst.

Weitere vorteilhafte Ausgestaltungen der vorliegenden Erfindung sind Gegenstand der abhängigen Ansprüche.

Gemäß einer ersten Ausführungsform weist ein Verfahren zur Erkennung einer Betätigungsbewegung zur sensorgesteuerten Aktivierung einer Betätigungseinrichtung für zumindest ein Kraftfahrzeug-Ausstattungselement, das zumindest zwei kapazitive Sensoren mit überlappenden Erfassungsbereichen aufweist, die Signale an ein Steuergerät zur Ansteuerung des zumindest einen Ausstattungselements bereitstellen, die Schritte auf: Festlegen zumindest einer Richtung der Betätigungsbewegung innerhalb der überlappenden Erfassungsbereiche als gültige Bewegungsrichtung zum Betätigen des Kraftfahrzeug-Ausstattungselements, Erfassen einer Bewegung durch die Erfassungsbereiche von zwei der Sensoren und Bestimmen einer Gesamtdauer der Bewegung durch die Erfassungsbereiche mit dem Steuergerät, Erfassen einer Überlappungsdauer der Bewegung in einem Überlappungsbereich der überlappenden Erfassungsbereiche, Berechnen eines Quotienten aus der Überlappungsdauer und der Gesamtdauer, Vergleichen des Quotienten mit einem vorbestimmten Grenzwert, der einen Gültigkeitsbereich von einem Ungültigkeitsbereich trennt, wobei der Grenzwert durch ein Verhältnis eines Streckenabschnitts durch den Überlappungsbereich zu einer mit dem Streckenabschnitt fluchtenden Gesamtstrecke durch die Erfassungsbereiche bestimmt wird, und Feststellen, ob die Bewegung eine Betätigungsbewegung mit gültiger Bewegungsrichtung ist, falls der Quotient im Gültigkeitsbereich liegt.

In der ersten Ausführungsform des Verfahrens wird die Erkennung einer von einem Fahrzeuginsassen ausgeführten Bewegung offenbart, die eine sensorgesteuerte Aktivierung einer Betätigungseinrichtung für ein Kraftfahrzeug-Ausstattungselement erlaubt. Zur Erkennung einer Aktivierungsbewegung sind jeweils nur zwei kapazitive Sensoren notwendig, die derart zueinander angeordnet sind, dass sie überlappende Erfassungsbereiche aufweisen.

So sind zur Erkennung einer Betätigungsbewegung Platz sparend nur zwei Sensoren erforderlich, so dass eine einfachste Betätigungseinrichtung Platz sparend aus lediglich zwei Sensoren bestehen kann, wenn nur ein Ausstattungselement zu betätigen ist und so der apparative Aufwand minimiert werden kann. Ist vorgesehen, dass mehr als ein Ausstattungselement betätigt werden soll, so ist es auch möglich, das Verfahren mit mehr als zwei Sensoren, etwa drei oder vier, auszuführen, wobei jeweils eine gültige Bediengeste für eines der Ausstattungselemente zwischen zwei Sensoren festgelegt werden kann.

Die kapazitiven Sensoren liefern, wenn eine Bewegung wie eine "Wischbewegung" oder eine andere Geste, die etwa durch eine Hand ausgeführt wird, Signale an ein Steuergerät um das Ausstattungselement anzusteuern. Das erfindungsgemäße Erkennungsverfahren umfasst nun, nachdem zumindest eine Richtung der Aktivierungsbewegung innerhalb der überlappenden Erfassungsbereiche als "gültige" Bewegungsrichtung festgelegt wurde, die zur Betätigung des Kraftfahrzeug-Ausstattungselements führen soll, das Erfassen einer Bewegung durch die überlappenden Erfassungsbereiche von zumindest zwei der Sensoren und das Bestimmen der Gesamtdauer der Bewegung durch die Erfassungsbereiche mittels des Steuergeräts. Gleichzeitig wird eine Überlappungsdauer der Bewegung in dem Bereich festgestellt, in dem sich die Erfassungsbereiche überlappen. Aus der Überlappungsdauer und der Gesamtdauer wird ein Quotient gebildet, der mit einem vorbestimmten Grenzwert verglichen wird, der einen Gültigkeitsbereich von einem Ungültigkeitsbereich trennt. Der Grenzwert wird dabei durch ein Verhältnis eines Streckenabschnitts durch den Überlappungsbereich zu einer mit diesem Streckenabschnitt fluchtenden Gesamtstrecke durch die Erfassungsbereiche bestimmt. Aus dem Vergleich des Quotienten mit dem vorbestimmten Grenzwert kann festgestellt werden, ob der Quotient in dem Gültigkeitsbereich liegt. Ist dies der Fall, so wird die Bewegung als Aktivierungs-oder Betätigungsbewegung mit gültiger Bewegungsrichtung festgestellt, so dass die Betätigung des Kraftfahrzeug-Ausstattungselements aktiviert wird.

Sind also mehr als zwei Sensoren mit mehreren Varianten gültiger Bediengesten für verschiedene Ausstattungselemente vorgesehen, so können je nach Sensorenanzahl durch das Steuergerät beim Erfassen einer Bewegung zumindest zwei gültige Bewegungsrichtungen zwischen verschiedenen Sensorpaaren unterschieden werden, um die Betätigungseinrichtungen für zumindest zwei Kraftfahrzeug-Ausstattungselemente sensorgesteuert zu aktivieren.

Ist also vorgesehen, dass mit der Betätigungseinrichtung mehr als ein Ausstattungselement aktiviert werden soll, so kann das Verfahren mit mehr als zwei Sensoren, etwa drei oder vier, ausgeführt werden, wobei nun vorteilhaft verschiedene Bediengesten zur Betätigung unterschiedlicher Ausstattungselemente erkannt und unterschieden werden können.

So können mit diesem Auswerteverfahren durch nur zwei Sensoren gültige von ungültigen Bewegungen für eine Bediengeste unterschieden werden, was einerseits dann vorteilhaft ist, wenn sich mehr als zwei Sensorelektroden, wie beispielsweise die üblichen vier Sensorelektroden, aus Kosten- oder Bauraumgründen nicht umsetzen lassen, und andererseits die Möglichkeit eröffnet, beim Einsatz von mehr als zwei Sensoren mehrere unterschiedliche gültige Bediengesten zu unterscheiden.

In einer weiteren Ausführungsform kann vorgesehen sein, dass die gültige Bewegungsrichtung zur Betätigung des Kraftfahrzeug-Ausstattungselements innerhalb der überlappenden Erfassungsbereiche im Wesentlichen parallel zu einer Linie verläuft, die sich durch die Zentralpunkte von zwei Sensoren, also längs derselben, zwischen denen eine gültige Bewegungsrichtung definiert ist, erstreckt, wobei der Gültigkeitsbereich unterhalb des Grenzwerts liegt. Das heißt, wenn der Quotient aus Überlappungsdauer zu Gesamtdauer kleiner ist als der Grenzwert, so handelt es sich um eine Betätigungsbewegung mit gültiger Bewegungsrichtung. Ist hingegen der Quotient aus Überlappungsdauer zu Gesamtdauer größer als der Grenzwert, wie dies bei einer Bewegung quer zu der gültigen Längsrichtung durch den Überlappungsbereich der Fall ist, handelt es sich um eine ungültige Bewegungsrichtung und die Aktivierung des Ausstattungselements erfolgt nicht.

Die erfindungsgemäße sensorgesteuerte Betätigungseinrichtung für ein oder mehrere Kraftfahrzeug-Ausstattungselemente weist Sensoren mit überlappenden Erfassungsbereichen und ein Steuergerät auf, das zum Signalempfang mit den Sensoren zur Aussteuerung des Ausstattungselements verbunden ist. Bei den Sensoren der Betätigungseinrichtung handelt es sich um zwei kapazitive Sensoren, die die Signalübertragung an das Steuergerät bereitstellen. Das Steuergerät weist eine Signalverarbeitungsfunktion auf, mit der das Verfahren zur Erkennung einer Betätigungsbewegung ausgeführt werden kann. In einer erfindungsgemäßen Ausführungsform kann die Betätigungseinrichtung vier Sensoren umfassen, die ein Viereck bildend angeordnet sind, wobei die gültigen Bewegungsrichtungen zur sensorgesteuerten Aktivierung jeweils eines Ausstattungselements jeweils zwischen zwei der Sensoren festgelegt sind.

Dabei kann vorgesehen sein, dass jeweils eine gültige Bewegungsrichtung zwischen zwei in dem Viereck benachbarten Sensoren festgelegt ist, wobei eine erste gültige Bewegungsrichtung im Wesentlichen senkrecht zu einer zweiten gültigen Bewegungsrichtung verläuft. Dabei ist denkbar, das mit einer Bediengeste entlang der ersten gültigen Bewegungsrichtung unabhängig davon, entlang welchem Sensorpaar diese Geste verläuft, ein Ausstattungselement bedient wird. Entsprechendes gilt auch für die zweite gültige Bewegungsrichtung. Alternativ können auch mehr als zwei Ausstattungselemente mit Bediengesten entlang der ersten und zweiten gültigen Bewegungsrichtung aktiviert werden, wenn zusätzlich zu der Unterscheidung zwischen erster und zweiter Bewegungsrichtung und gültiger und ungültiger Bewegungsrichtung jeweils ein bestimmtes Sensorpaar zur Bedienung eines Ausstattungselements festgelegt ist.

In Ergänzung zu den gültigen Bewegungsrichtungen, die zwischen zwei Sensoren entlang der Seiten des Vierecks verlaufen, kann zusätzlich zumindest eine dritte gültige Bewegungsrichtung festgelegt werden, die zwischen zwei in dem Viereck diagonal gegenüberliegenden Sensoren definiert ist. Voraussetzung für die Verwendung der in dem Viereck diagonal gegenüberliegenden Sensoren, um das erfindungsgemäße Verfahren durchführen zu können, ist, dass sich die Erfassungsbereiche der diagonal gegenüberliegenden Sensoren überlappen.

Zur Ausführung des erfindungsgemäßen Verfahrens kann das Steuergerät eine Datenverarbeitungseinheit umfassen, die die Signalverarbeitungsfunktion ausführt, und in der der Grenzwert gespeichert ist.

Bei dem betätigbaren Ausstattungselement kann es sich um eine Leuchtvorrichtung handeln, die bei Erkennung einer gültigen Bewegung durch die Sensoren ein- und ausgeschaltet werden kann, es können aber auch bewegbare Kraftfahrzeug-Ausstattungselemente sein, wie zum Beispiel ein Dachsegment, ein Fenster, eine Tür, eine Kofferraumklappe, sein, die entsprechend geöffnet beziehungsweise geschlossen oder auch nur verstellt (im Falle eines Sitzes) werden können.

So kann es sich bei der sensorgesteuerten Betätigungseinrichtung zum Beispiel um eine am Dach angeordnete "Dachbedieneinheit" handeln, die zur Betätigung eines Ausstattungselements nun durch die Verwendung von lediglich zwei kapazitiven Sensoren auch mit Gestenerkennung betätigbar ausgeführt werden kann.

Weist die Dachbedieneinheit vier Sensoren auf, so können verschiedene Ausstattungselemente wie beispielsweise fahrer- und beifahrerseitige Leuchten bzw. Leseleuchten und eine Innenleuchte gestenbasiert bedient werden. Dann kann eine fahrerseitige Leuchtvorrichtung mit einer Bewegung entlang der ersten gültigen Betätigungsrichtung zwischen einem ersten Sensorpaar betätigt werden, die beifahrerseitige Leuchtvorrichtung mit einer Bewegung im Wesentlichen parallel zu der ersten gültigen Betätigungsrichtung zwischen einem zweiten Sensorpaar betätigt werden, während die Innenleuchtvorrichtung mit einer Bewegung entlang der zweiten gültigen Betätigungsrichtung zwischen einem Sensor des ersten Sensorpaars und einem dazu benachbarten Sensor des zweiten Sensorpaars betätigt werden kann.

Ferner wird ein Kraftfahrzeug offenbart, das betätigbare Kraftfahrzeug-Ausstattungselemente aufweist, und das zu diesem Zweck zumindest eine erfindungsgemäße sensorgesteuerte Betätigungseinrichtung aufweist. Weist das Kraftfahrzeug mehrere betätigbare Ausstattungselemente auf, kann die Betätigungseinrichtung zumindest drei Sensoren zur Unterscheidung von zumindest zwei gültigen Betätigungsrichtungen aufweisen, oder es kann beispielsweise für jedes der Ausstattungselemente eine sensorgesteuerte Betätigungseinrichtung mit nur zwei Sensoren vorgesehen sein.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Es zeigt:
- Fig. 1: eine schematische Ansicht auf ein Dachbedienelement, das zwei sensorgesteuerte Betätigungseinrichtungen mit jeweils einem Sensorpaar aufweist,
- Fig. 2: eine Fig. 1 entsprechende Ansicht mit eingezeichneten Erfassungsbereichen für das erste Sensorpaar,
- Fig. 3: eine Fig. 2 entsprechende Ansicht mit einer durch Pfeile angedeuteten Betätigungsbewegung,
- Fig. 4: eine Fig. 2 entsprechende Darstellung mit einer durch Pfeile angedeuteten ungültigen Bewegung,
- Fig. 5: eine Darstellung der von den Sensoren einer Betätigungseinrichtung gelieferten Signale während einer Betätigungsbewegung,
- Fig. 6: eine Fig. 1 entsprechende Ansicht mit eingezeichneten Erfassungsbereichen für eine Sensorpaarung zwischen einem Sensor des ersten Sensorpaars und einem Sensor des zweiten Sensorpaars mit einer durch Pfeile angedeuteten Betätigungsbewegung,
- Fig. 7: eine Fig. 6 entsprechende Darstellung mit einer durch Pfeile angedeuteten ungültigen Bewegung, und
- Fig. 8: eine Darstellung der von der Sensorpaarung aus Fig. 6 gelieferten Signale während der Betätigungsbewegung.

Mit dem erfindungsgemäßen Verfahren kann eine Betätigungsbewegung, mit der eine Betätigungseinrichtung für ein Kraftfahrzeug-Ausstattungselement aktiviert wird, von einer ungültigen Bewegung in einem Erfassungsbereich von verwendeten kapazitiven Sensoren unterschieden werden.

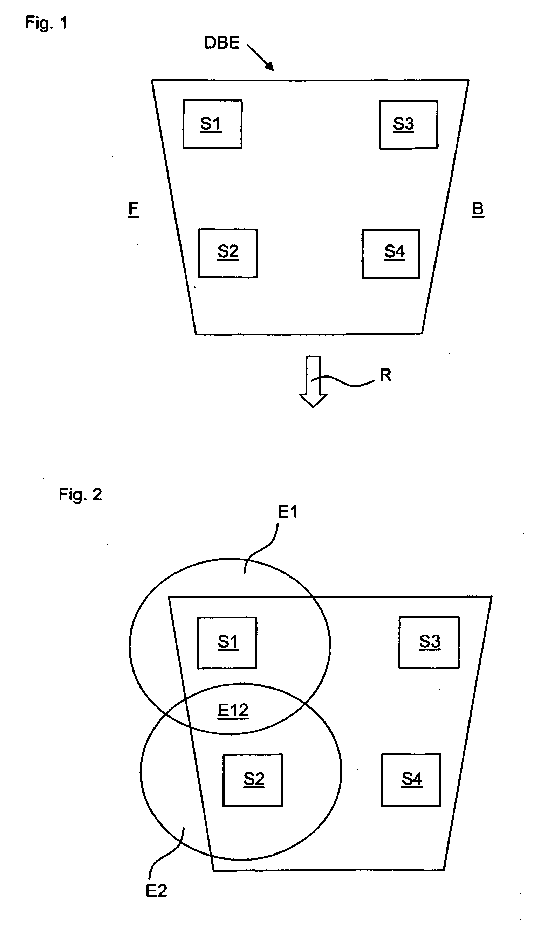

Fig. 1 zeigt dazu eine Dachbedieneinheit DBE, quasi in der Verbausituation im Fahrzeug, in der Blockpfeil R in Richtung Windschutzscheibe weist. Sowohl auf der Fahrerseite F als auch auf der Beifahrerseite B befindet sich jeweils eine Betätigungsvorrichtung mit zwei kapazitiven Sensoren. Auf der Fahrerseite F liegen die Sensoren S1 und S2, auf der Beifahrerseite B die Sensoren S3 und S4.

In den folgenden Figuren sind zur Erläuterung des Verfahrens Vorgänge und Erfassungsbereiche nur für die fahrerseitigen Sensoren S1 und S2 dargestellt, entsprechendes gilt jedoch auch für die Betätigungsvorrichtung auf der Beifahrerseite mit den Sensoren S3 und S4.

Die jeweiligen Betätigungsvorrichtungen der dargestellten Dachbedieneinheit DBE können zum Beispiel zur Betätigung einer Leuchtvorrichtung für Fahrer und/oder Beifahrer eingesetzt werden. Es ist auch denkbar, dass andere Ausstattungselemente mit einer derartigen sensorgesteuerten Betätigungsvorrichtung betätigt werden können. So kann es sich bei dem Ausstattungselement, das mit der sensorgesteuerten Betätigungsvorrichtung angesteuert werden kann, um ein Dachsegment, wie zum Beispiel um ein Schiebedach handeln, das je nach Öffnungszustand geöffnet oder geschlossen wird, wenn die Sensoren der Betätigungsvorrichtung eine Betätigungsbewegung in gültiger Bewegungsrichtung erfassen.

Es kann sich auch um ein automatisch versenkbares Verdeck eines Cabrios handeln, das mittels der sensorgesteuerten Betätigungsvorrichtung angesteuert werden kann. Ferner sind das Öffnen und Schließen von Fenstern, Türen und Kofferraumklappen denkbar, sowie das Verstellen von ansteuerbaren Sitzen.

Die Sensoren S1 und S2, sowie S3 und S4 liefern den Wert 0 an das Steuergerät, wenn sie kein Objekt in ihrem Erfassungsbereich E1,E2 erfassen. Sie liefern jeweils den Wert 1, wenn sie in ihrem Erfassungsbereich E1,E2 ein Objekt erfassen.

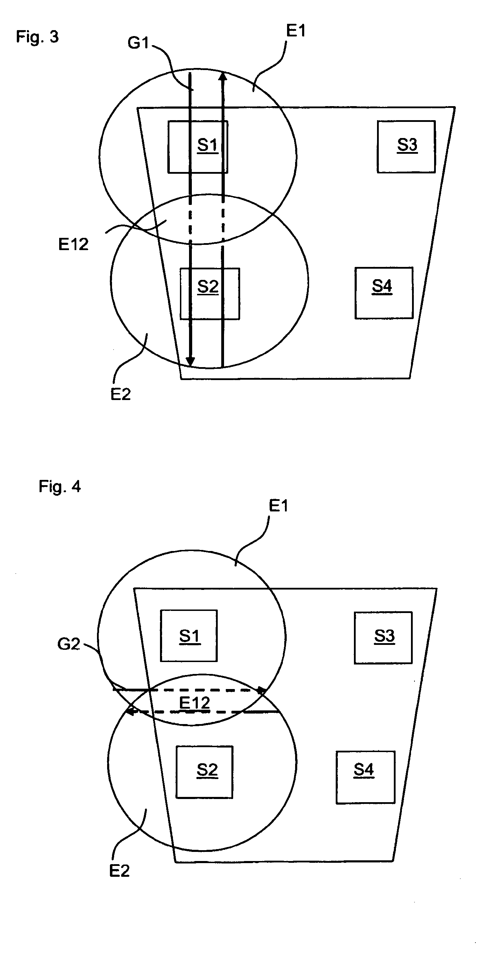

Die Erfassungsbereiche der Sensoren S1 und S2 sind in Fig. 2 dargestellt. Der Erfassungsbereich E1 von Sensor S1 und der Erfassungsbereich E2 von Sensor S2 überlappen sich in dem Überlappungsbereich E12. Diese Anordnung der Erfassungsbereiche E1,E2, kann bei der Erkennung der gültigen Betätigungsbewegung G1, zu sehen in Fig. 3, herangezogen werden, indem durch das Steuergerät, das mit den Sensoren S1,S2 gekoppelt ist, die Zeitdauern festgestellt werden, in welchen jeweils nur ein Sensor der beiden aktiv ist, und wie lange beide Sensoren aktiv sind.

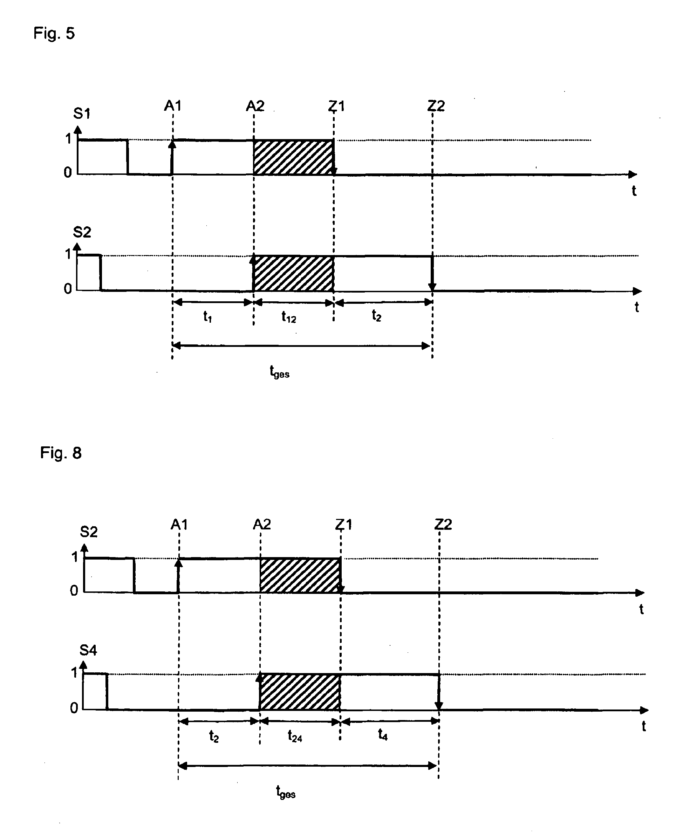

Die dazu von den Sensoren an das Steuergerät übermittelten Signale sind in Fig. 5 dargestellt. Die Gesamtdauer der Geste G1 wird von der ansteigenden Flanke ab Zeitpunkt A1 des Signals des ersten Sensors 1 bis zu der abfallenden Flanke zum Zeitpunkt Z2 des zweiten Sensor S2 berechnet. Die Überlappungsdauer t₁₂, die in Fig. 3 in dem Gestenpfeil G1 durch den gestrichelten Bereich skizziert ist, wird von der ansteigenden Flanke des Signals des zweiten Sensors S2 zum Zeitpunkt A2 bis zur abfallenden Flanke des Signals des ersten Sensors S1 zum Zeitpunkt Z1 berechnet.

Die Gesamtdauer t_{ges} umfasst demzufolge die Zeitabschnitte t₁ von dem Zeitpunkt A1 der ansteigenden Flanke des Signals des ersten Sensors S1 bis zu der ansteigenden Flanke des Signals des zweiten Sensors S2, in der nur Sensor S1 ein Signal liefert, die Überlappungsdauer t₁₂, sowie den Zeitabschnitt t₂, in dem nur Sensor S2 ein Signal liefert, und der sich von dem Zeitpunkt Z1 der abfallenden Flanke des Signals des ersten Sensors S1 bis zu dem Zeitpunkt Z2 der abfallenden Flanke des Signals des zweiten Sensors S2 erstreckt.

Aus den derart festgestellten Überlappungsdauern t₁₂ und Gesamtdauern t_{ges} kann ein Quotient gebildet werden, mit dem sich die zulässigen/gültigen Längsbewegungen, wie Geste G1, von unzulässigen/ungültigen Querbewegungen G2, wie in Fig. 4 dargestellt, voneinander unterscheiden lassen, indem der Quotient mit einem vorbestimmten Grenzwert verglichen wird. Dieser Grenzwert, der einen Gültigkeitsbereich von einem Ungültigkeitsbereich trennt, hängt dabei von einem Verhältnis eines Streckenabschnitts durch den Überlappungsbereich E 12 zu einer mit diesem Streckenabschnitt fluchtenden Gesamtstrecke durch beide Erfassungsbereiche E1,E2 ab.

Wie in Fig. 3 zu sehen ist, ist der Streckenabschnitt in dem Überlappungsbereich E12 der Geste G1 deutlich kürzer als die insgesamt durch die Erfassungsbereiche E1,E2 zurückgelegte Gesamtstrecke der Geste G1. Das heißt, bei einer gleichmäßig ausgeführten Geste wird die Zeitdauer bei der Passage des Überlappungsbereichs E12 deutlich kürzer sein als die Gesamtdauer der in den Erfassungsbereichen E1,E2 erfassten Geste G1.

Hingegen wird bei einer ungültigen Bewegung G2, wie mit der Querbewegung in Fig. 4 dargestellt, eine deutliche Überlappungsdauer in dem Überlappungsbereich E12 durch die Sensoren S1,S2 festgestellt, die nur geringfügig kürzer als die Gesamtdauer der Geste G2 ist, wobei hier der Quotient näher bei 1 liegt als bei einer gültigen Geste, die, wie in Fig. 3 gezeigt ist, deutlich unter 1 liegt. Der jeweilige Grenzwert hängt von den Abmessungen der Erfassungsbereiche E1,E2 sowie der Distanz der Sensoren S1 und S2 und damit der Größe des Überlappungsbereichs E12 im Verhältnis zu den Erfassungsbereichen E1,E2 ab.

Anders als hier dargestellt können gültige und ungültige Bewegung auch zum Beispiel genau umgekehrt festgelegt sein, das heißt, eine ungültige Bewegung oder Geste würde dann in Längsrichtung verlaufen, während eine gültige Geste in Querrichtung verläuft, wobei hier entsprechend die Gültigkeitsbereiche in Bezug auf den Grenzwert umgekehrt gelagert wären. Das heißt, falls der Quotient aus Überlappungsdauer zu Gesamtdauer größer als der Grenzwert festgestellt wird, läge hier eine gültige Betätigungsbewegung vor, während, wenn der Quotient kleiner als der Grenzwert wäre, eine ungültige Bewegung vorläge.

Ferner wäre denkbar, dass die Unterscheidbarkeit der Gesten auf diese Weise zur Betätigung von zwei verschiedenen Kraftfahrzeug-Ausstattungselementen herangezogen wird, zum Beispiel im Falle der Dachbedieneinheit, eine Gestenbewegung zum Ein- und Ausschalten einer Leuchtvorrichtung und die andere Gestenbewegung zum Öffnen eines Schiebedachs.

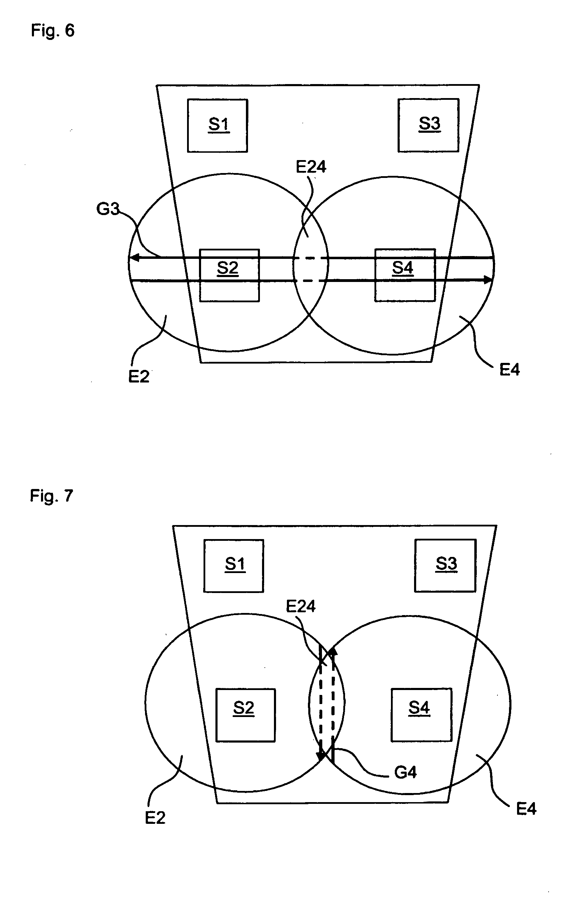

Eine weitere Variation zur Betätigung mehrerer Ausstattungselemente mit der Dachbedieneinheit, die mit den zwei Sensorpaaren S1,S2 und S3,S4 zwei Betätigungseinrichtungen umfasst, lässt sich durch Definieren weiterer gültiger Bediengesten zwischen einem Sensor S1,S2 des ersten Sensorpaars und einem Sensor S3,S4 des zweiten Sensorpaars erhalten. Wie in Fig. 6 gezeigt, ist eine weitere gültige Bewegungsrichtung G3 zwischen dem Sensor S2 und dem Sensor S4 festgelegt. Selbstverständlich kann auf entsprechende Weise auch eine gültige Bewegungsrichtung zwischen den Sensoren S1 und S3 oder zwischen den diagonal gegenüberliegenden Sensoren S1 und S4 oder S2 und S3 festgelegt werden, falls die Erfassungsbereiche E1,E2,E4 der Sensoren S1,S2,S3,S4 so groß sind, dass sie sich überschneiden.

In Fig. 6 überlappen die Erfassungsbereiche E2,E4 im Überlappungsbereich E24. Wie im Zusammenhang mit Fig. 3 beschrieben, kann nun auch die Anordnung der Erfassungsbereiche E2,E4 zur der Erkennung der gültigen Betätigungsbewegung G3 herangezogen werden, indem durch das Steuergerät, das nicht nur mit den Sensoren S1,S2 sondern auch S3,S4 gekoppelt ist, die Zeitdauern festgestellt werden, in welchen jeweils nur ein Sensor der beiden Sensoren, die die Bewegung erfassen, aktiv ist, und wie lange beide Sensoren aktiv sind.

Die dazu von den Sensoren S2,S4 an das Steuergerät übermittelten Signale, dargestellt in Fig. 8, entsprechen den Signalen der Sensoren S1,S2, die in Fig. 5 gezeigt sind. So wird die Gesamtdauer der Geste G3 auch von der ansteigenden Flanke ab Zeitpunkt A1 des Signals des ersten Sensors S2 bis zu der abfallenden Flanke zum Zeitpunkt Z2 des zweiten Sensors S4 berechnet. Die Überlappungsdauer t₂₄, die in Fig. 5 in dem Gestenpfeil G3 durch den gestrichelten Bereich skizziert ist, wird von der ansteigenden Flanke des Signals des zweiten Sensors S4 zum Zeitpunkt A2 bis zur abfallenden Flanke des Signals des ersten Sensors S2 zum Zeitpunkt Z1 berechnet.

Die Gesamtdauer t_{ges} umfasst demzufolge die Zeitabschnitte t₂ von dem Zeitpunkt A1 der ansteigenden Flanke des Signals des ersten Sensors S2 bis zur ansteigenden Flanke des Signals des zweiten Sensors S4, in der nur Sensor S2 ein Signal liefert, die Überlappungsdauer t₂₄, sowie den Zeitabschnitt t₄, in dem nur Sensor S4 ein Signal liefert, und der sich von dem Zeitpunkt Z1 der abfallenden Flanke des Signals des ersten Sensors S2 bis zu dem Zeitpunkt Z2 der abfallenden Flanke des Signals des zweiten Sensors S4 erstreckt.

Aus den derart festgestellten Überlappungsdauem t₂₄ und Gesamtdauern t_{ges} kann wie oben beschrieben der Quotient gebildet werden, mit dem sich die zulässigen/gültigen Querbewegungen, wie die Geste G3, von unzulässigen/ungültigen Querbewegungen G4, wie in Fig. 7 dargestellt, voneinander unterscheiden lassen, indem der Quotient mit einem vorbestimmten Grenzwert verglichen wird. Dieser Grenzwert, der einen Gültigkeitsbereich von einem Ungültigkeitsbereich trennt, hängt dabei von einem Verhältnis eines Streckenabschnitts durch den Überlappungsbereich E24 zu einer mit diesem Streckenabschnitt fluchtenden Gesamtstrecke durch beide Erfassungsbereiche E2,E4 ab.

Wie in Fig. 6 zu sehen ist, ist der Streckenabschnitt im Überlappungsbereich E24 der Geste G3 deutlich kürzer als die gesamte durch die Erfassungsbereiche E2,E4 zurückgelegte Gesamtstrecke der Geste G3. Das heißt, bei einer gleichmäßig ausgeführten Geste wird die Zeitdauer bei der Passage des Überlappungsbereichs E24 deutlich kürzer sein, als die Gesamtdauer der in den Erfassungsbereichen E2,E4 erfassten Geste G3.

Hingegen wird bei einer ungültigen Bewegung G4, wie mit der Längsbewegung in Fig. 7 dargestellt, eine deutlich längere Überlappungsdauer im Überlappungsbereich E24 durch die Sensoren S2,S4 festgestellt, die nur geringfügig kürzer als die Gesamtdauer der Geste G4 ist, so dass hier der Quotient näher bei 1 liegt als bei einer gültigen Geste, die, wie in Fig. 6 gezeigt, deutlich unter 1 liegt. Der jeweilige Grenzwert hängt von den Abmessungen der Erfassungsbereiche E2,E4 sowie der Distanz der Sensoren S2 und S4 und damit der Größe des Überlappungsbereichs E24 im Verhältnis zu den Erfassungsbereichen E2,E4 ab.

So wird das Auswerteverfahren zur Erfassung von Bediengesten an verschiedenen Sensorpaarungen zwischen den Sensoren S1,S2,S3,S4, in Längsrichtung an dem ersten und zweiten bzw. dem dritten und vierten und in Querrichtung an dem ersten und dritten bzw. dem zweiten und vierten kapazitiven Sensor S1,S2,S3,S4 durchgeführt. Dabei wird für Signale von null oder eins der ersten und zweiten (dritten und vierten) bzw. ersten und dritten (zweiten und vierten) kapazitiven Sensoren S1,S2,S3,S4 jeweils eine Überlappungsdauer berücksichtigt, um gültige und ungültige Bewegungen in Längs- und Querrichtung der kapazitiven Sensoren S1,S2,S3,S4 voneinander zu unterscheiden. Dann kann zum Beispiel mit einer Längsbewegung über S1 und S2 das Licht bzw. Leselicht auf der Fahrerseite bedient werden und mit einer Längsbewegung über die Sensoren S3 und S4 das Licht bzw. Leselicht auf der Beifahrerseite. Mit einer Querbewegung über die Sensoren S2 und S4 (oder auch S1 und S3) kann zum Beispiel das Innenlicht sowohl auf Fahrerseite als auch auf Beifahrerseite bedient werden. Damit können sowohl das Licht bzw. Leselicht auf Fahrer-/Beifahrerseite als auch Innenlicht durch Gesten, nämlich Wischbewegung, ein-/ausgeschaltet werden. Entsprechend können für weitere Sensorpaarungen gültige von ungültigen Bewegungsrichtungen festgestellt werden.

Die Anzahl der Sensoren ist dabei nicht auf vier beschränkt. So ist auch eine Bedieneinheit mit nur drei Sensoren denkbar, die entsprechend drei Sensorpaarungen für verschiedene Bediengesten bereitstellt, für die dann jeweils eine gültige von einer ungültigen Bewegungsrichtung unterschieden werden kann. Generell sind, wenn genügend Bauraum vorhanden ist, auch mehr als vier Sensoren denkbar, mit der entsprechend steigenden Anzahl möglicher Sensorpaarungen.

Eine derartige sensorgesteuerte Betätigungsvorrichtung, die in ihrer minimierten Ausgestaltung lediglich zwei kapazitive Sensoren aufweisen muss, macht daher lediglich eine Signalverarbeitungsfunktion erforderlich, mit der das Auswerteverfahren zum Erkennen einer Betätigungsbewegung in Abhängigkeit der von den jeweiligen Sensorpaaren erfassten Signale und deren Bezug zueinander ausgeführt werden kann.

Dabei ist es denkbar, dass diese Signalverarbeitungsfunktion lediglich durch Schaltung entsprechender elektrischer Bausteine ausführbar ist; ein Steuergerät kann aber auch eine Datenverarbeitungseinheit umfassen, mit dem die Signalverarbeitungsfunktion zur Ausführung des Verfahrens ausgeführt werden kann.

Obgleich die vorliegende Erfindung vorhergehend anhand eines Ausführungsbeispiels beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verweisen.

## Patentansprüche

1. Verfahren zum Erkennen einer Betätigungsbewegung (G1,G3) zum sensorgesteuerten Aktivieren eines Kraftfahrzeug-Ausstattungselements mittels einer kapazitive Sensoren (S1,S2,S3,S4) mit überlappenden Erfassungsbereichen (E1,E2,E4) aufweisenden Betätigungsvorrichtung, wobei das Verfahren aufweist:
Festlegen einer Richtung der Betätigungsbewegung (G1,G3) innerhalb der überlappenden Erfassungsbereiche (E1,E2,E4) als eine gültige Bewegungsrichtung, und
Erfassen einer Bewegung (G1,G2,G3,G4) durch Erfassungsbereiche (E1,E2,E4) von zwei kapazitiven Sensoren (S1,S2,S3,S4) und Bestimmen einer Gesamtdauer (t_{ges}) der Bewegung (G1,G2,G3,G4) durch die Erfassungsbereiche (E1,E2,E4) der zwei kapazitiven Sensoren (S1,S2,S3,S4),
**gekennzeichnet durch**
Erfassen einer Überlappungsdauer (t₁₂,t₂₄) der Bewegung (G1,G2,G3,G4) in einem Überlappungsbereich (E12,E24) der überlappenden Erfassungsbereiche (E1,E2,E4),
Berechnen eines Quotienten aus der Überlappungsdauer (t₁₂,t₂₄) und der Gesamtdauer (t_{ges}),
Vergleichen des Quotienten mit einem vorbestimmten Grenzwert, der einen Gültigkeitsbereich von einem Urigültigkeitsbereich trennt, und
Bestimmen, dass die Bewegung (G1,G2,G3,G4) eine Betätigungsbewegung (G1,G3) mit gültiger Bewegungsrichtung ist, falls der Quotient in dem Gültigkeitsbereich ist.

2. Verfahren nach Anspruch 1, **dadurch gekennzeichnet, dass** der Grenzwert durch ein Verhältnis eines Streckenabschnitts durch den Überlappungsbereich (E12,E24) zu einer mit dem Streckenabschnitt fluchtenden Gesamtstrecke durch die Erfassungsbereiche (E1,E2,E4) bestimmt wird.

3. Verfahren nach Anspruch 1 oder 2, **gekennzeichnet durch** Unterscheiden von zwei gültigen Bewegungsrichtungen (G1,G3) zwischen drei kapazitiven Sensoren (S1,S2,S3,S4) bei dem Erfassen der Bewegung (G1,G2,G3,G4) zum sensorgesteuerten Aktivieren von zwei Kraftfahrzeug-Ausstattungselementen.

4. Verfahren nach einem der Ansprüche 1 bis 3, **dadurch gekennzeichnet, dass** die gültige Bewegungsrichtung innerhalb der überlappenden Erfassungsbereiche (E1,E2;E4) parallel zu einer Linie verläuft, die sich durch Zentralpunkte von zwei Sensoren (S1,S2,S3,S4) erstreckt, und der Gültigkeitsbereich unterhalb des Grenzwerts liegt.

5. Betätigungsvorrichtung für ein Kraftfahrzeug-Ausstattungselement, die Einrichtungen aufweist, die dazu ausgelegt sind, ein Verfahren nach einem der Ansprüche 1 bis 4 auszuführen.

6. Betätigungsvorrichtung nach Anspruch 5, **dadurch gekennzeichnet, dass** die Betätigungsvorrichtung eine Dachbedieneinheit (DBE) ist und/oder das Ausstattungselement mindestens eines einer Leuchtvorrichtung, eines Dachsegments, eines Fensters, einer Tür, einer Kofferraumklappe und eines Sitzes aufweist.

## Claims

1. Method for the recognition of an actuating movement (G1, G3) for the sensor-controlled activation of a motor vehicle equipment element by means of an actuating device comprising capacitive sensors (S1, S2, S3, S4) with overlapping detection ranges (E1, E2, E4), the method comprising:
the determination of a direction of the actuating movement (G1, G3) within the overlapping detection ranges (E1, E2, E4) as a valid direction of movement, and
the detection of a movement (G1, G2, G3, G4) through detection ranges (E1, E2, E4) of two capacitive sensors (S1, S2, S3, S4) and the determination of an overall duration (t_{ges}) of the movement (G1, G2, G3, G4) through the detection ranges (E1, E2, E4) of two capacitive sensors (S1, S2, S3, S4),
**characterised by**
the detection of an overlap duration (t₁₂, t₂₄) of the movement (G1, G2, G3, G4) in an overlapping range (E12, E24) of the detection ranges (E1, E2, E4),
the calculation of a quotient from the overlap duration (t₁₂, t₂₄) and the overall duration (t_{ges}),
the comparison of the quotient to a predetermined limit value which separates a valid range from an invalid range, and
the verification that the movement (G1, G2, G3, G4) is an actuating movement (G1, G3) with a valid direction of movement, if the quotient lies within the valid range.

2. Method according to claim 1, **characterised in that** the limit value is determined by a relationship between a route section through the overlapping range (E12, E24) and a total route through the detection ranges (E1, E2, E4), which is in alignment with the route section.

3. Method according to claim 1 or 2, **characterised by** differentiating between two valid directions of movement (G1, G3) between three capacitive sensors (S1, S2, S3, S4) when detecting the movement (G1, G2, G3, G4) for the sensor-controlled activation of two motor vehicle equipment elements.

4. Method according to any of claims 1 to 3, **characterised in that** the valid direction of movement extends within the overlapping detection ranges (E1, E2, E4) parallel to a line which runs through central points of two sensors (S1, S2, S3, S4), and **in that** the valid range lies below the limit value.

5. Actuating device for a motor vehicle equipment element, comprising devices which are designed for the execution of a method according to any of claims 1 to 4.

6. Actuating device according to claim 5, **characterised in that** the actuating device is a roof operating unit (ROU), and/or **in that** the equipment element comprises one or more of an illumination device, a roof segment, a window, a door, a boot lid and a seat.

## Revendications

1. Procédé de reconnaissance d'un mouvement d'actionnement (G1, G3) destiné à l'activation commandée par capteurs d'un élément d'équipement de véhicule automobile au moyen d'un dispositif d'actionnement comprenant des capteurs capacitifs (S1, S2, S3, S4) avec des zones de détection (E1, E2, E4) se chevauchant, le procédé consistant à :
définir une direction du mouvement d'actionnement (G1, G3) dans les zones de détection (E1, E2, E4) se chevauchant en tant que direction de mouvement valable, et
détecter un mouvement (G1, G2, G3, G4) à travers les zones de détection (E1, E2, E4) de deux capteurs capacitifs (S1, S2, S3, S4) et déterminer une durée totale (t_{ges}) du mouvement (G1, G2, G3, G4) à travers les zones de détection (E1, E2, E4) des deux capteurs capacitifs (S1, S2, S3, S4), **caractérisé par** la détection d'une durée de chevauchement (t₁₂, t₂₄) du mouvement (G1, G2, G3, G4) dans une zone de chevauchement (E12, E24) des zones de détection (E1, E2, E4) se chevauchant, par le calcul d'un quotient à partir de la durée de chevauchement (t₁₂, t₂₄) et de la durée totale (t_{ges}), par la comparaison du quotient à la valeur limite prédéfinie, qui sépare une zone de validité d'une zone d'invalidité et, par la détermination que le mouvement (G1, G2, G3, G4) est un mouvement d'actionnement (G1, G3) ayant une direction de mouvement valable, dans le cas où le quotient se trouve dans la zone de validité.

2. Procédé selon la revendication 1, **caractérisé en ce que** la valeur limite est définie par un rapport entre une section de trajet à travers la zone de chevauchement (E12, E24) et un trajet total en alignement avec la section de trajet à travers les zones de détection (E1, E2, E4).

3. Procédé selon la revendication 1 ou la revendication 2, **caractérisé par** la distinction de deux directions de mouvement valables (G1, G3) entre trois capteurs (S1, S2, S3, S4) capacitifs lors de la détection du mouvement (G1, G2, G3, G4) destinées à l'activation commandée par des capteurs de deux éléments d'équipement de véhicule automobile.

4. Procédé selon l'une quelconque des revendications 1 à 3, **caractérisé en ce que** la direction de mouvement valable dans les zones de détection (E1, E2, E4) se chevauchant s'étend parallèlement à une ligne, ladite ligne passant par des points centraux de deux capteurs (S1, S2, S3, S4), et la zone de validité se trouvant en dessous de la valeur limite.

5. Dispositif d'actionnement pour un élément d'équipement de véhicule automobile, qui présente des dispositifs qui sont conçus pour mettre en oeuvre le procédé selon l'une quelconque des revendications 1 à 4.

6. Dispositif d'actionnement selon la revendication 5, **caractérisé en ce que** le dispositif d'actionnement est une unité de commande de toit (DBE) et/ou l'élément d'équipement présente au moins un dispositif d'éclairage d'un segment de toit, d'une fenêtre, d'une porte, d'un hayon et d'un siège.
